# EUROPEAN PATENT APPLICATION

(11) **EP 1 628 217 A2**
(43) Date of publication of application: **22.02.2006**
(21) Application number: 05250851.2
(22) Date of filing: 15.02.2005
(51) Int. Cl.: G06F 9/46

(54) **Operating system for information equipment, and information equipment**

(30) Priority: 11.08.2004 JP 2004234731
(71) Applicant: KABUSHIKI KAISHA TOSHIBA, Tokyo 105-8001 (JP)
(72) Inventor: Shimizu, Nobuo, c/o Intellectual Property Division, Minato-ku Tokyo (JP)
(74) Representative: Granleese, Rhian Jane

(57) **Abstract**

A system is configured by connecting a PC (3), for running an application, with a cellular phone (2), remote-operating the application via a communication network (4). The cellular phone (2) includes a communication unit configured to transmit/receive various information, an operating unit configured to receive an input operation and outputting operating information based on the input operation, a control information processing unit configured to provide the operating information received from the operating unit to the PC (3) or operating an application to be operated, a memory for receiving text data of objects to be stored in the clipboard of the PC (3) via the communication unit and storing the text data, and also reading out the stored text data, and an operating-side display unit configured to display the text data stored in the memory. Thus, the amount of data is suppressed and operability and performance maintained when remote-operating information equipment using low speed communication networks.

## Description

### CROSS REFERENCE TO RELATED APPLICATIONS

The application is based upon and claims the benefit of priority from the prior Japanese Patent Application No.2004-234731, filed on August 11, 2004, the entire contents of which is incorporated herein by reference.

### BACKGROUND OF THE INVENTION

### 1. Field of the Invention

The present invention relates to an information equipment remote operating system for operating a display device at a remote location from another information equipment via a network, and particularly relates to an information equipment remote operating system for allowing a user to reference and edit a text while suppressing the amount of data communication to be sent via a network.

### 2. Description of the Related Art

In recent years, information equipment capable of connecting to a network, such as cellular phones capable of connecting to the Internet and PDAs (Personal Digital Assistants) housing a wireless LAN (Local Area Network), has come into widespread use. In addition, the resolution of a display device included in the information equipment has increased, and display of fine images has been enabled. Accordingly, development of products and studies for connecting to other information equipment such as a personal computer at a remote location from information equipment via a network, and operating the information equipment, have advanced.

For example, a technique for operating a personal computer (PC), to which software is preinstalled, from a cellular phone and PDA available for use of a Web browser via a network has been disclosed in "Software for Realizing Remote Operations of PC from Cellular Phone", Japan IBM, [online], press release, [searched on April 19, 2004], Internet <URL: http://www-6.ibm.com/jp/domino05/ewm/NewsDB.nsf/2002/05271>, for example.

In the same way, a technique for operating a PC, to which software is preinstalled, using a Web browser or dedicated viewer available for use of a specific language has been disclosed in "Virtual Network Cc", ATT, [online], [searched on April 19, 2004], Internet <URL: http://www.uk.research.att.com/archive/vnc/>, for example.

Furthermore, a remote operating system for remote-operating a PC from a cellular phone by using a method in which a relay server is provided between the cellular phone and the PC, and communication between the relay server and the cellular phone is performed using the original protocol has been realized, as disclosed in "Research of Computer Remote Operating System Using Cellular Phone", Masato Nakasu, [online], University of Tsukuba, [searched on April 19, 2004], Internet <URL:
http://www.iplab.is.tsukuba.ac.jp/~baru/research/keitai.html>, for example.

However, for example, the circuit speed of a packet communication network used for cellular phones and the like is generally slower than the Internet used for PCs and the like, for example. Accordingly, in the event that remote operations of a PC is performed from a cellular phone via a packet communication network, the range for scrolling the display range increases as the amount of data communication increases, resulting in lower operability. In addition, since data communication between the cellular phone and the PC is continuing, increase of the amount of data communication sometimes causes temporary deterioration of performance such as preventing smooth scrolling due to a poorer scroll speed at the time of scrolling the display range.

Furthermore, in the event that a text file to be remote-operated has an object other than text, remote-operating the data of the PC so as to be displayed on the cellular phone deletes the object other than the text, resulting in inconvenience at the time of display and editing.

### SUMMARY OF THE INVENTION

Accordingly, the present invention has been made in light of the aforementioned problems, and it is an object of the present invention to provide an information equipment remote operating system and information equipment so as to suppress the amount of data communication and prevent operability from deterioration and performance from temporary deterioration even at the time of remote-operating information equipment using a communication network at a low circuit speed.

In addition, it is another object of the present invention to provide an information equipment remote operating system and information equipment so as to improve convenience at the time of display and edit in the event that a text file to be remote-operated has an object other than a text.

To this end, according to a first aspect of the present invention, an information equipment remote operating system is configured by connecting an operated-side information equipment for running an application program with an operating-side information equipment remote-operating the application program, the operating-side information equipment comprises: a communication unit configured to transmit/receive various types of information to/from the operated-side information equipment; an operating unit configured to output an operating information based on input operations; a control information processing unit configured to transmit the operating information received from the operating unit to the operated-side information equipment via the communication unit in the event that the operating information received from the operating unit is operating information for operating an application program to be run on the operated-side information equipment, and so as to operate the application program to be operated in the case in which the operating information received from the operating unit is operating information for operating an application program to be run on the operating-side information equipment; a text storing unit configured to receive and store text data of objects to be stored in the clipboard of the operated-side information equipment via the communication unit, and also edit the stored text data; and a text storing unit configured to allow the text data of the text storing unit to be displayed.

Further, to this end, according to a second aspect of the present invention, an information equipment comprises: a communication unit configured to transmit/receive various types of information to/from information equipment so as to run an application program; an operating unit configured to output an operating information based on input operations; a control information processing unit configured to operate an application program to be operated based on the operating information received from the operating unit; and a text storing unit configured to store and read out text data, wherein the control processing unit is configured to read out an object to be stored in storing unit included in another information equipment to be connected-therewith via a communication network.

Furthermore, to this end, according to a third aspect of the present invention, an information equipment for remotely controlling another information equipment having a clipping board, comprise: a communication device to communicate various types of information to/from another information equipment via a network, so as to remotely run an application program on the another information equipment; an receiving unit configured to receive input operations by a user, one of the input operation being a retrieving request to the another information equipment; a text storage to store text data; a control processing unit configured to transmit the retrieving request to the another information equipment and configured to retrieve the object is a text data.

In the above aspects, the control processing unit may include: at least one of a text copy function for storing text data created by copying text data to be stored in storing unit included in another information equipment to be connected therewith via a communication network in the text storing unit, and a text acquisition function for storing text data created based on an object to be stored in storing unit included in another information equipment to be connected therewith via a communication network in the text storing region of a text editor; and a text substitution function for substituting the text portion of text data stored in the text storing region by using the text acquisition function with the text portion of an object to be stored in the storing unit.

In the above aspects, the control processing unit may be configured to create text data by substituting the portion other than the text attribute of an object to be stored in storing unit included in another information equipment to be connected therewith via a communication network with a specific text code.

In the above aspects, the control processing unit may be configured to create text data by substituting a portion other than the text attribute of an object to be stored in storing unit included in another information equipment to be connected therewith via a communication network with a specific text code in which a link information is embedded in the event that the portion other than the text attribute of the object includes link information, and also so as to jump to a link destination embedded in the selected specific text code, and to allow the information of the link destination to be viewed in the event that the specific text code of the text data created from the object to be stored in the storing unit is selected.

In the above aspects, the information equipment may further comprise a text editor to edit the retrieved object and a transmitter configured to transmit the edited object by the text editor to the another information equipment.

According to an information equipment operating system and information equipment according to the present invention, the amount of data communication can be markedly reduced as compared with the conventional case of directly performing remote operations. Consequently, operating performance improves at the operating-side information equipment, resulting in preventing performance from temporary deterioration.

Further, even in the event that an object to be imported and rewritten includes an attribute other than the text attribute, just the text portion can be edited without affecting the object other than text and the attribute thereof.

Furthermore, even in the event that an object imported in operating-side information equipment includes an attribute other than the text attribute, the entity of the object other than a text may be referenced by means of simple operations using a normal remote operating reference function.

### BRIEF DESCRIPTION OF THE DRAWINGS

Fig. 1 is a schematic configuration diagram illustrating the configuration of an information equipment remote operating system according to the present invention;
Fig. 2 is a detailed configuration diagram illustrating the configuration of the information equipment remote operating system according to the present invention in further detail;
Fig. 3 is an explanatory diagram schematically describing an object copy function in a PC;
Fig. 4 is an explanatory diagram schematically describing text edit functions in the information equipment remote operating system according to the present invention;
Fig. 5 is an explanatory diagram illustrating a screen example to be displayed on an operating-side display unit in the event that information equipment according to the present invention is under a remote operating mode;
Fig. 6 is an explanatory diagram illustrating a screen example to be displayed on an operating-side display unit in the event that information equipment according to the present invention is under a text edit mode;
Fig. 7 is an external view illustrating the outside of a cellular phone serving as operating-side information equipment in the information equipment remote operating system according to the present invention;
Fig. 8 is an explanatory diagram illustrating an screen example to be displayed on the operating-side display unit under the text edit mode in the event that a screen on which a direction instructing key is displayed is switched to a screen on which a cursor movement key is displayed under the text edit mode of the information equipment according to the present invention;
Fig. 9 is an explanatory diagram illustrating the flow of a text object and text data in the event that a role key using a text copy function included in the information equipment according to the present invention is selected;
Fig. 10 is an explanatory diagram illustrating a screen example to be displayed on an operating-side display unit in the event that information equipment according to the present invention is under a text selection mode;
Fig. 11 is a processing flowchart illustrating copy processing steps to be performed from the PC to the cellular phone in the information equipment remote operating system according to the present invention;
Fig. 12 is a processing flowchart illustrating copy processing steps to be performed from the cellular phone to the PC in the information equipment remote operating system according to the present invention;
Fig. 13 is an explanatory diagram illustrating the flow of a text object and text data in the event that a role key using a text import function and text substitution function included in the information equipment according to the present invention is selected;
Fig. 14 is an explanatory diagram schematically describing the text edit functions in the information equipment remote operating system according to the present invention;
Fig. 15 is a detailed configuration diagram illustrating the configuration of the information equipment remote operating system according to the present invention in more detail;
Fig. 16 is an explanatory diagram illustrating an example of a selected object selected by an application running at the PC in the information equipment remote operating system according to the present invention;
Fig. 17 is an explanatory diagram illustrating a screen display example to be displayed on the operating-side display unit in the event that the selected object illustrated in Fig. 16 is text-imported in a text editor of the cellular phone from the PC as converted text data using a text import function included in the information equipment according to the present invention; and
Fig. 18 is a processing flowchart illustrating import-from-PC processing steps and feed-back-to-PC processing steps performed in the information equipment remote operating system according to the present invention.

### DESCRIPTION OF THE PREFERRED EMBODIMENTS

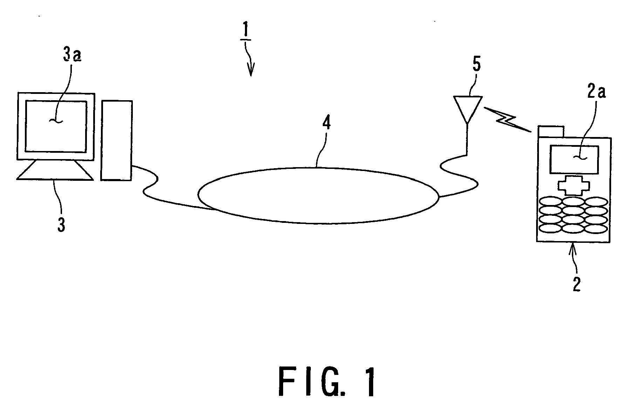

Now, description will be made regarding an embodiment of the present invention with reference to the drawings. Further, it is to be noted that terms indicating directions such as "up or down", "left or right" and the like are used herein with reference to actually used state of information equipment remote operating system or in a state illustrated on the drawings. Fig. 1 is a schematic configuration diagram schematically illustrating the system configuration of an information equipment remote operating system 1 serving as an embodiment of the information equipment remote operating system according to the present invention.

The information equipment remote operating system 1 is configured to communicate a cellular phone 2 serving as an example of operating-side information equipment with a personal computer (hereinafter, referred to as PC) 3 serving as an example of operated-side information equipment via the Internet 4 serving as an example of networks. More specifically, the Internet 4 is connected with a base station 5 for sending/receiving information to/from the cellular phone 2. The cellular phone 2 is provided with an operating-side display unit 2a, and the PC 3 is provided with an operated-side display unit 3a.

Note that the network in the information equipment remote operating system 1 is not restricted to the Internet 4, and accordingly, a network such as a LAN may be employed, and cable or wireless communication may be employed. In addition, the operating-side information equipment is not restricted to equipment having mobility for the display unit such as the cellular phone 2 or a PDA. In other words, as long as the operating-side information equipment can communicate with the operated-side information equipment, the operating-side information equipment may be directly connected to the network without using wireless communication. Furthermore, the cellular phone 2 and PC 3 do not need to connect to the Internet 4 all the time, and it is sufficient for each to connect to the Internet 4 only at the time of use.

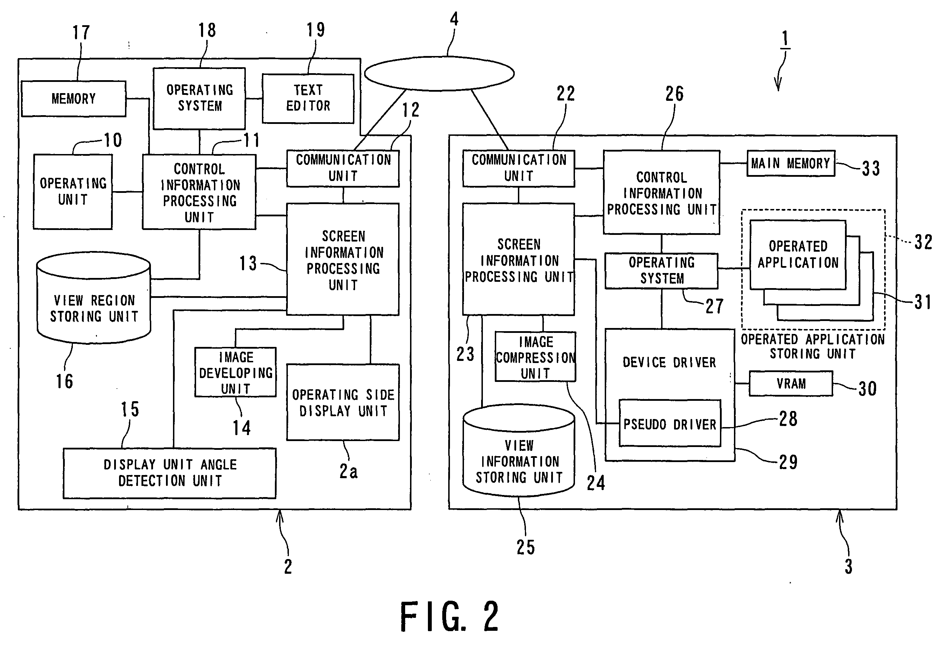

Fig. 2 is a detailed configuration diagram illustrating the configuration of the information equipment remote operating system 1 in more detail. Note that the base station 5 is omitted in Fig. 2 from the perspective of simplifying the diagram.

According to Fig. 2, the cellular phone 2 includes an operating unit 10, control information processing unit 11, communication unit 12, screen information processing unit 13, operating-side display unit 2a, image developing unit 14, display unit angle detection unit 15, view region storing unit 16, memory 17 serving as text storing unit, basic software (hereinafter, referred to as OS, which is an abbreviation of Operating System) 18, and text editor 19. Here, the view region means the screen range of the PC 3 to be displayed on the cellular phone 2, and information for stipulating the view region is called as view information.

The operating unit 10 of the cellular phone 2 has a function for receiving various types of information from a user according to user operations and providing the information to the control information processing unit 11.

The control information processing unit 11 has not only a role serving as control information processing means for controlling the screen information processing unit 13, memory 17, or OS 18 but also a role serving as control information processing means for processing operating information received from the operating unit 10.

The control information processing unit 11 includes text edit functions for receiving operating information related to creation and edit of text data received from the operating unit 10 and providing the received operating information to the OS 18 or transmitting the information to the PC 3 via the communication unit 12 in order to fulfill a role as control information processing means and control information processing means, a function for providing operating information related to various types of operations of the cellular phone 2 itself received from the operating unit 10 to the screen information processing unit 13, and a function for receiving view region edit operating information and editing the view information stored in the view region storing unit 16.

In addition, the control information processing unit 11 includes a function for copying a display object such as a text, shape, or image (hereinafter, simply referred to as object) selected from the operating unit 10 in an application program (hereinafter, simply referred to as application) to be operated in a text format to the memory 17 of the cellular phone 2 via the main memory 28 of the PC 3, or copying the text stored in a text storing region (omitted in Fig. 2) of the text editor 19 (hereinafter, referred to as text copy function), as one of the text edit functions.

Further, the control information processing unit 11 includes a function for substituting the portion other than the text attribute of a selected object with text data and importing the created text data to the text storing region of the text editor 19 (hereinafter, referred to as text import function), and a function for editing only the text portion from the cellular phone 2 following importing the text data and substituting the text portion of the selected object with the edited text portion (hereinafter, referred to as text substitution function), as one of the text edit functions.

Furthermore, the control information processing unit 11 includes, for example, delimiter information and the like to be required at the time of providing the text edit functions, more specifically, text copy function, text import function, and text substitution function to the user, though not illustrated in Fig. 2.

The communication unit 12 includes a function for transmitting various types of information received from the screen information processing unit 13 or the control information processing unit 11 to the PC 3 via the network, and also a function for providing various types of information received from the PC 3 to the screen information processing unit 13 or the control information processing unit 11.

The screen information processing unit 13 includes a function for developing compression image information received from the PC 3 to the image developing unit 14 via the communication unit 12, a function for writing view information received from the PC 3 via the communication unit 12 into the view region storing unit 16, a function for providing the developed image to the operating-side display unit 2a so as to display the image in a predetermined display format based on the view information stored in the view region storing unit 16, and a function for providing the updated view information to the communication unit 12 so as to transmit the information to the PC 3 in the event that the view information stored in the view region storing unit 16 is updated. The operating-side display unit 2a includes a function for displaying an image received from the screen information processing unit 13.

The image developing unit 14 includes a function for receiving compressed image information from the screen information processing unit 13 and performing developing processing and providing the developed image information to the screen information processing unit 13.

The display unit angle detection unit 15, which is provided in the case in which the operating-side display unit 2a of the cellular phone 2 has a function for changing the direction thereof such as a rotational function, includes a function for detecting that the direction of the operating-side display unit 2a is changed and providing the detection results to the screen information processing unit 13.

The view region storing unit 16 stores view information received from the PC 3 via the communication unit 12. The memory 17 includes a clipboard (omitted in Fig. 2) 20 for storing text data selected by the user in an application to be operated.

The OS 18 is basic software for running an application, and includes a function for running the text editor 19 serving as an application example. The text editor 19 is an application for creating and editing text data, and includes functions required for creation and edit of text data such as input, deletion, copy, and import of text data.

On the other hand, the PC 3 includes a communication unit 22, screen information processing unit 23, image compression unit 24, view information storing unit 25, control information processing unit 26, OS 27, device driver 29 having a pseudo-driver 28, VRAM (Video Random Access Memory) 30, application storing unit 32 for storing an operated application 31, and main memory 33 serving as storing unit.

The communication unit 22 of the PC 3 includes a function for transmitting various types of information received from the screen information processing unit 23 or the control information processing unit 26 to the cellular phone 2 via the network, and a function for receiving various types of information from the cellular phone 2 and providing the information to the screen information processing unit 23 or the control information processing unit 26.

The screen information processing unit 23 includes a function for acquiring a part or the entire of the screen information displayed on the operated-side display unit 3a of the PC 3 from the VRAM 30 via the pseudo-driver 28 of the device driver 29 based on the view information stored in the view information storing unit 25, a function for providing image information acquired from the VRAM 30 to the image compression unit 24 so as to compress the image information, and a function for providing the view information to the communication unit 22 as well as the compressed image information so as to transmit the information to the cellular phone 2.

The image compression unit 24 includes a function for compressing image information received from the screen information processing unit 23 and providing the compressed image information to the screen information processing unit 23.

The view information storing unit 25 stores created information for stipulating the range and relative position of an image in the case in which the entire or a part of the screen to be displayed on the operated-side display unit 3a of the PC 3 is displayed on the operating-side display unit 2a of the cellular phone 2 as an initial state beforehand.

The control information processing unit 26 includes a function for providing the operating information of an application received from the cellular phone 2 via the communication unit 22 to the OS 27 so as to execute the operation of the application, and a function for receiving updated view information from the cellular phone 2 via the communication unit 12 and providing the received view information to the screen information processing unit 23 so as to update the view information stored in the view information storing unit 25.

The VRAM 30 is memory for storing image information displayed on the operated-side display unit 3a of the PC 3. The application storing unit 32 is a region for storing an application program. The application storing unit 32 stores various types of applications to be run on the OS 27 of the PC 3, and an application read in the OS 27 from the application storing unit 32 is to be operated. Here, an application to be operated is referred to as an operated application 31.

The main memory 33 includes a clipboard (omitted in Fig. 2) 34 for storing a selected object in an application to be operated. The clipboard 34 of the main memory 33 is different from the clipboard 20 of the memory 17 of the cellular phone 2, which cannot store an object including data other than text data with no change, in that an object including data other than text data can be stored without any change.

With the information equipment remote operating system 1 thus configured, an object selected in the operated application 31 can be pasted (stored) to the clipboard 34 of the main memory 33 of the PC 3. The text copy function, text import function, and text substitution function are realized by configuring the cellular phone 2 so as to use the object pasted to the clipboard 34.

In other words, the information equipment remote operating system 1 is a system configured to realize a function for copying an object in the PC 3 between the PC 3 and the cellular phone 2 (hereinafter, referred to as object copy function).

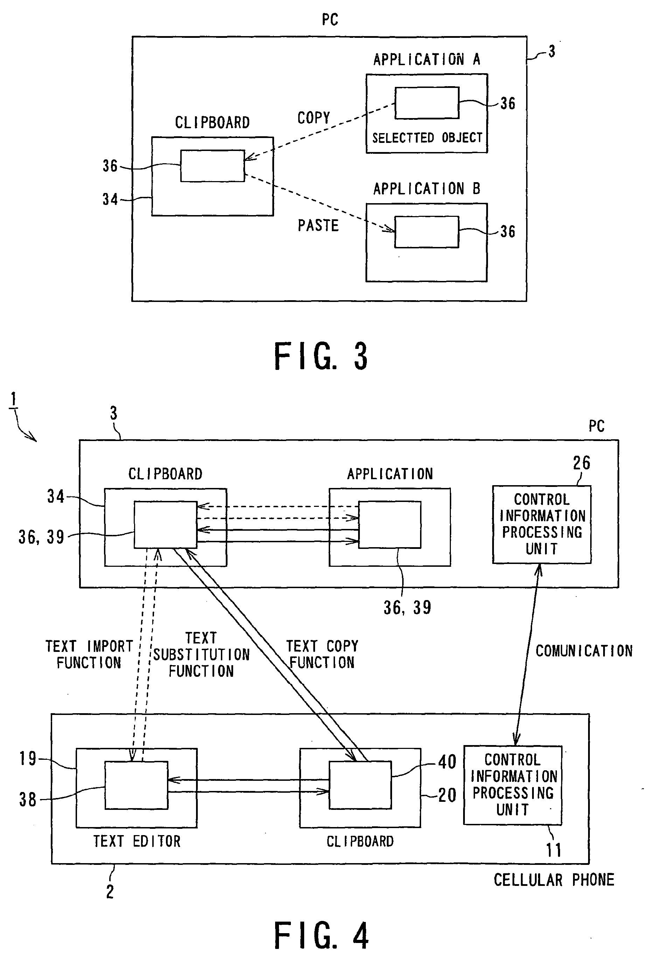

Fig. 3 is an explanatory diagram schematically describing the object copy function in the PC 3. Fig. 4 is an explanatory diagram schematically describing the text edit functions in the information equipment remote operating system 1.

Note that in Fig. 4, the communication unit 12 of the cellular phone 2 and the communication unit 22 of the PC 3 are omitted for the sake of simplifying the drawing. In Fig. 4, solid line arrows represent transfer of an object or text data in the case of using the text copy function, and dashed line arrows represent transfer of an object or text data in the case of using the text import function and the text substitution function.

The object copy function in the PC 3 means a function for allowing objects selected in all of the applications to be run on the PC 3 to be pasted to the clipboard 34, and for allowing the objects pasted to the clipboard 34 to be inserted at an arbitrary location of an object included in all of the applications running on the PC 3.

According to an example illustrated in Fig. 3, an object (hereinafter, referred to as selected object) 36 selected from objects included in an application A to be run on the PC 3 is copied and pasted to the clipboard 34, and the selected object 36 pasted to the clipboard 34 is pasted (inserted) in an arbitrary location in an object included in an application B to be run on the PC 3.

In Fig. 3, in the event of paying attention to the application A and application B, the selected object 36 selected in the application A is consequently inserted in the application B. In other words, the object copy function allows exchange of an object between applications via the clipboard 34 at the PC 3.

Note that according to Fig. 3, the pasting destination of an object in the clipboard 34 is the object of the application B, but may be the object of the application A. In other words, an application including the selected object and an application including the pasting destination of an object may the same.

On the other hand, the text edit functions included in the cellular phone 2 (control information processing unit 11 in detail) in the information equipment remote operating system 1 illustrated in Fig. 4 are a function generally equivalent to the object copy function of the PC 3 illustrated in Fig. 3, but the difference between these is in that the range in which an object is exchanged is not within the PC 3 but between the PC 3 and the cellular phone 2.

As illustrated in Fig. 3, in the case of the object copy function for exchanging an object only within the PC 3, employing only the clipboard 34 of the PC 3 does not cause any problem in realizing the function. However, in the case of the text edit functions, an object is exchanged between the cellular phone 2 and the PC 3 as illustrated in Fig. 4, and accordingly, not only the clipboard 34 of the PC 3 but also the clipboard 20 of the cellular phone 2 are employed.

As illustrated in Fig. 2, the cellular phone 2 is configured to mutually exchange operating information input from the operating unit 10 between the control information processing unit 11 of the cellular phone 2 and the control information processing unit 26 of the PC 3 via the communication unit 12 of the cellular phone 2 and the communication unit 22 of the PC 3, the operating information input from the operating unit 10 of the cellular phone 2 can be transmitted to the control information processing unit 26 of the PC 3.

Accordingly, upon the user inputting an application operation from the operating unit 10 of the cellular phone 2, the function included in the control information processing unit 26 for operating an application can be remote-executed from_the cellular phone 2.

According to Fig. 4, application operating information is mutually exchanged between the control information processing unit 11 of the cellular phone 2 and the control information processing unit 26 of the PC 3, and the selected object 36 remote-selected in all of the applications to be run on the PC 3 can be pasted to the clipboard 34 from the cellular phone 2.

As for the selected object 36 pasted to the clipboard 34, the portion including an attribute other than the text attribute can be substituted with a specific text code (for example, a later-described pictorial symbol 63 or the like) so as to obtain text data (hereinafter, referred to as converted text data) 38. The converted text data 38 can be stored in the text storing region of the text editor 19 of the cellular phone 2 (text import function), or edited so as to substitute the text data of the selected object 36 with the edited converted text data (text substitution function).

In the event that an object pasted to the clipboard 34 is an object having the text attribute (hereinafter, referred to as text object) 39, only text data 40 included in the text object can be pasted to the clipboard 20 of the cellular phone 2, and the text data 40 pasted to the clipboard 20 can be stored in the text storing region of the text editor 19, and also edited as necessary (text copy function).

Next, description will be made regarding operating procedures for utilizing the text edit functions of the cellular phone 2, and also regarding each processing step to be performed by utilizing the text edit functions.

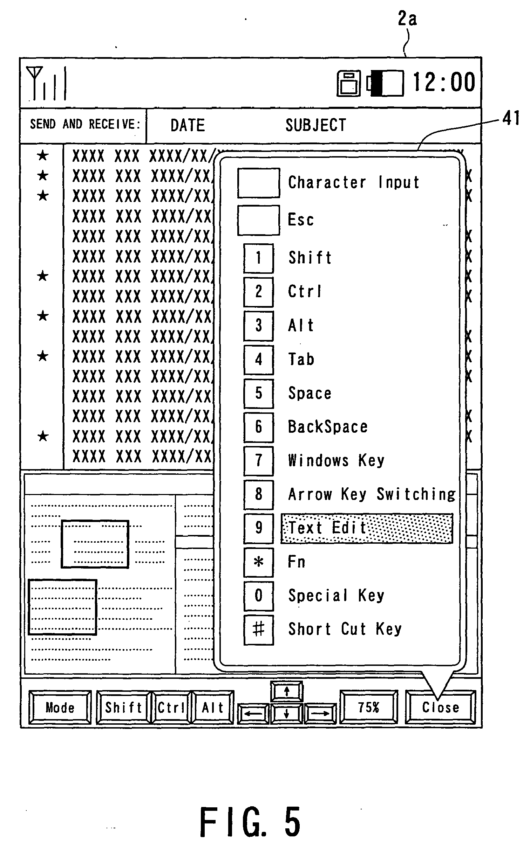

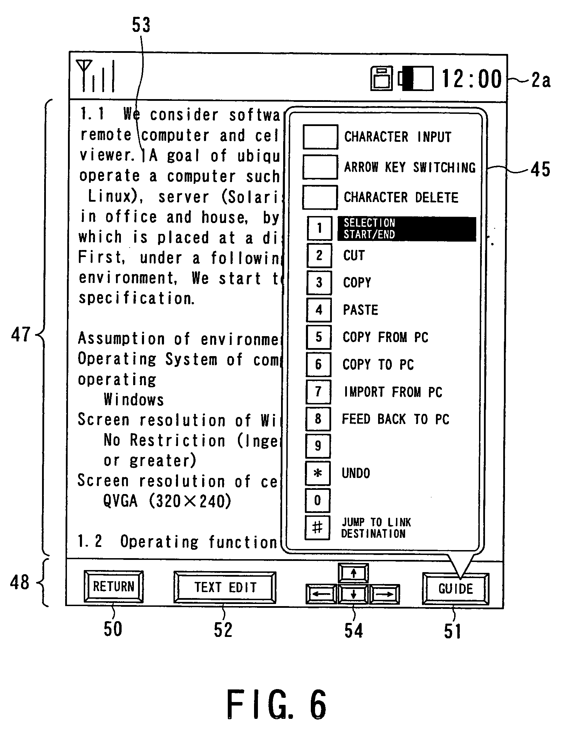

The text edit functions of the cellular phone 2 are utilized through the following state transitions, for example. With a state wherein the user is remote-operating an application on the PC 3 from the cellular phone 2 (hereinafter, referred to as remote operating mode) such as illustrated in Fig. 5, following an object to be edited being selected, transition is made from the remote operating state to the text edit mode for editing text such as illustrated in Fig. 6, and the text edit functions of the cellular phone 2 are utilized under the text edit mode. Operations for making the transition to another mode state are input from the operating unit 10 of the cellular phone 2.

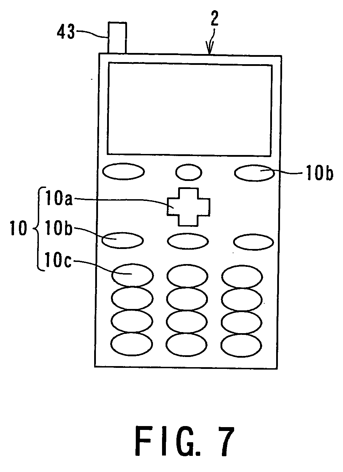

Fig. 7 is an external view schematically illustrating the outside of the cellular phone 2 serving as the operating-side information equipment in the information equipment remote operating system 1.

The cellular phone 2 is provided with the operating unit 10 as well as the operating-side display unit 2a. The operating unit 10 includes an up/down/left/right button 10a serving as a direction instructing key, a function button 10b serving as a role key for fulfill a role such as switching of the mode or phone call, and numeric buttons 10c serving as keys for inputting a character or number. In addition, the cellular phone 2 includes an antenna unit 43 for sending/receiving radiowaves, and exchanges various types of information such as image information or operating information of the PC 3 as to the PC 3 by sending/receiving radiowaves between the cellular phone 2 and the base station 5 via this antenna unit 43.

Note that the cellular phone 2 illustrated in Fig. 7 is a general example of the cellular phone 2. In other words, the external view of the cellular phone 2 in the information equipment remote operating system 1 is not restricted to an arrangement illustrated in Fig. 7, and all arrangements generally used for the cellular phone 2 may be employed.

First of all, to use the text edit function, the user needs to make the transition to a screen state under the text edit mode from the remote operating mode illustrated in Fig. 5. Selecting a text edit key makes the transition to the text edit mode. The text edit key corresponds to the [9] button in the numeric buttons 10c of the cellular phone 2 as a guide example to be displayed on an operating guide 41. Note that the operating guide 41 illustrated in Fig. 5 is an example, and is not restricted to this.

Upon the [9] button being pressed so as to select the text edit key in the cellular phone 2, the control information processing unit 11 receives operating information thereof, and makes the transition to the text edit mode state from the remote operating mode state.

Fig. 6 is an explanatory diagram illustrating a screen example to be displayed on the operating-side display unit 2a under the text edit mode. Note that Fig. 6 illustrates a state wherein the operating guide 45 is displayed for the sake of explanatory convenience. The operating guide 45 illustrated in Fig. 6 is also an example as with Fig. 5, and is not always restricted to this. According to Fig. 6, the operating-side display unit 2a includes a text display area 47 and status display area 48. The text display area 47 is an area for displaying the text data stored in the text storing region of the text editor 19.

A return key 50 and guide key 51 serving as role keys, a mode display frame 52 for displaying the current mode, and a direction instructing key 54 for instructing a direction to move a cursor 53 in increments of a character are displayed on the status display area 48. Here, the return key 50 is a key to be selected in the case of executing an operation for returning the mode to the remote operating mode (Fig. 5). The guide key 51 is a key for displaying the operating guide 45 indicating the relations between the desired operations and corresponding operating buttons 10a, 10b, and 10c on the operating-side display unit 2a.

More specifically, the return key 50 and the guide key 51 correspond to the function button 10b in the operating unit 10 of the cellular phone 2, and input of the return key 50 and the guide key 51 can be performed via the function button 10b. The direction instructing key 53 corresponds to the up/down/left/right button 10a, and input of the direction instructing key 53 can be performed via the up/down/left/right button 10a.

With the cellular phone 2, the direction instructing key 51 can be switched to a cursor moving key 58 capable of moving the cursor 53 to a large extent from the perspective of convenience of text edit work. Switching of the direction instructing key 51 is performed by selecting an arrow-key-switching key to be displayed in the 2nd line from the top, as exemplified in the operating guide 45 in Fig. 6. Selection of the arrow-key-switching key can be performed by the function button 10b of the cellular phone 2.

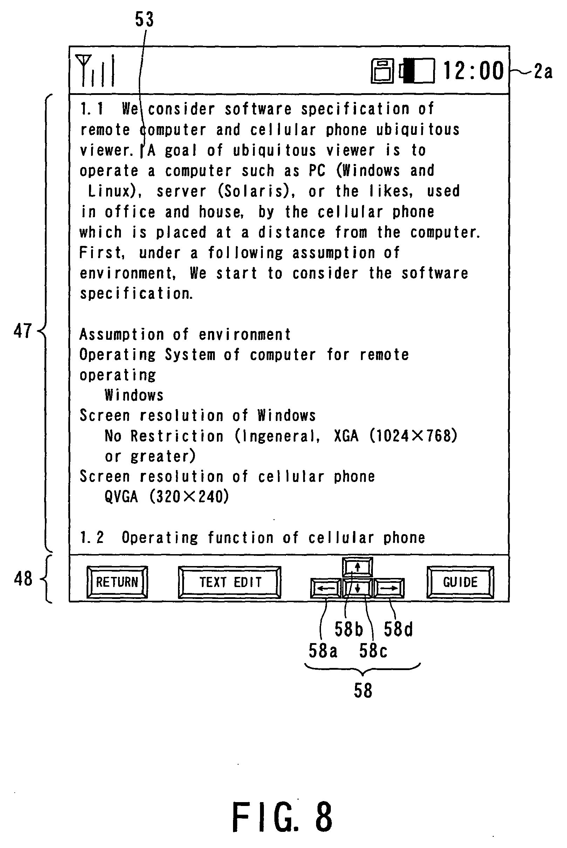

Fig. 8 is an explanatory diagram illustrating an screen example to be displayed on the operating-side display unit 2a under the text edit mode following the direction instructing key 51 being switched from the screen under the text edit mode illustrated in Fig. 6.

As illustrated in Fig. 8, the cursor moving key 58 includes a Home key 58a for moving the cursor 53 to the left edge of the current line, a PgUp key 58b for moving the cursor 53 to the previous page, an End key 58c for moving the cursor 53 to the right edge of the current line, and a PgDn key 58d for moving the cursor 53 to the next page.

The Home key 58a, PgUp key 58b, End key 58c, and PgDn key 58d are disposed corresponding to the directions for moving the cursor 53 as illustrated in Fig. 8 in light of operability. More specifically, with the up/down/left/right button 10a, pressing the up button thereof selects the PgUp key 58b, pressing the down button thereof selects the PgDn key 58d, pressing the left button thereof selects the Home key 58a, and pressing the right button thereof selects the End key 58c.

Going through the aforementioned operations allows the user to utilize the text edit functions, i.e., text copy function, text import function, and text substitution function under the text edit mode such as displayed in Fig. 6 (or Fig. 8). Of the text edit functions, in the event of utilizing the text copy function, keys corresponding to the [1] through [6] buttons of the numeric buttons 10c are selected as illustrated in the operating guide 45 of the Fig. 6.

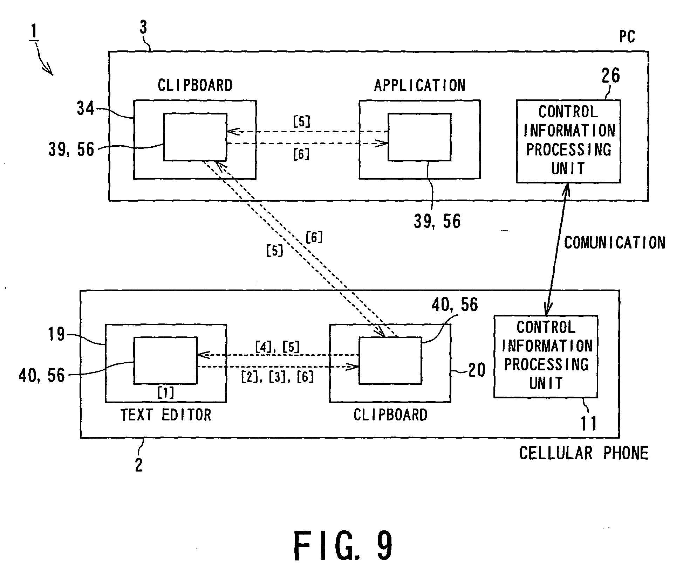

Fig. 9 is an explanatory diagram illustrating the flow of a text object and text data in the event that a role key utilizing the text copy function is selected. Note that the [1] through [6] buttons illustrated in Fig. 9 indicate transfer of a text object and text data in the event that a key corresponding to the numeric buttons 10c of the operating guide 45 illustrated in Fig. 6 is selected. In Fig. 9, the communication unit 12 of the cellular phone 2 and the communication unit 22 of the PC 3 are omitted from the same perspective as Fig. 4.

Upon the user pressing any one of the [1] through [6] buttons of the numeric buttons 10c under the text edit mode illustrated in Fig. 6, the role key corresponding to the pressed numeric buttons 10c is selected, and the control information processing unit 11 and the control information processing unit 26 execute the role corresponding to the selected role key. Next, description will be made regarding the role of each role key corresponding to the numeric buttons 10c and the processing content thereof.

The [1] button of the numeric buttons 10c corresponds to a selection start/end key. The selection start/end key is used at the time of switching between the text selection mode for copying a text and the text edit mode, and determining the start and end points of a range to copy a text under the text selection mode. Accordingly, the start/end key is used in the event that text data is exchanged between the text editor 19 and the clipboard 20 within the cellular phone 2.

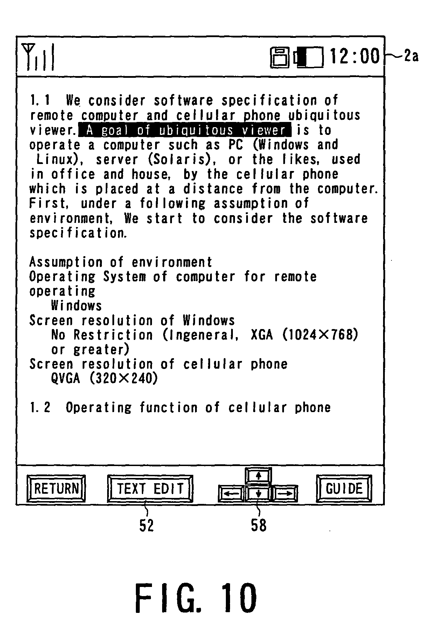

Upon the user selecting the start/end key from a screen under the text edit mode illustrated in Fig. 6, the screen can be switched to the text selection mode illustrated in Fig. 10, for example. Upon the user switching the screen to the text selection mode, display of the mode display frame 52 is switched from "TEXT EDIT" to "TEXT SELECTING", as illustrated in Fig. 10.

Upon the user selecting the selection start/end key under the text selection mode, the position of the cursor 53 is determined as the start point of the selection range, and then upon the user further moving the cursor 53 so as to select the end point of the selection range, the position of the cursor 53 is determined as the end point of the selection range. The selected text is highlighted as illustrated in Fig. 10, thereby facilitating visual recognition of the selected text.

Upon the user selecting the selection start/end key in a state wherein the selection range is determined, the mode is switched from the text selection mode to the text edit mode. Note that with the cellular phone 2, long-pressing the [1] button of the numeric buttons 10c so as to select the selection start/end key allows the user to select the entire range of a text under the text selection mode.

The [2] button of the numeric buttons 10c corresponds to a cut key. Upon the user selecting the cut key, text data (hereinafter, referred to as selected text data) 56 of the selected range is cut off, and the selected text data 56 cut off is pasted to the clipboard 20.

The [3] button of the numeric buttons 10c corresponds to a copy key. Upon the user selecting the copy key, the selected text data 56 is copied, and the copied selected text data 56 is pasted to the clipboard 20.

The [4] button of the numeric buttons 10c corresponds to a paste key. Upon the user selecting the paste key, the selected text data 56 copied in the clipboard 20 is inserted in the position of the cursor 53 specified in the text data to be stored in the text editor 19.

The [5] button of the numeric buttons 10c corresponds to a copy-from-PC key. Upon the user selecting the copy-from-PC key, only the text data 40 is copied from the text object pasted to the clipboard 34 of the PC 3 to the position of the cursor 53 specified in the text data to be stored in the text editor 19, and the copied text data 40 can be pasted to the clipboard 20 of the cellular phone 2.

The [6] button of the numeric buttons 10c corresponds to a copy-to-PC key. Upon the user selecting the copy-to-PC key, the text data pasted to the clipboard 20 of the cellular phone 2 is copied in the position of the cursor 53 specified in the text data to be stored in the text editor 19, and the copied text data can be pasted to the clipboard 34 of the PC 3.

Accordingly, the keys corresponding to the [1] through [4] buttons of the numeric buttons 10c, i.e., the selection start/end key, cut key, copy key, and paste key are utilized in the event that text data is exchanged between the text editor 19 and the clipboard 20 within the cellular phone 2, as can be understood from Fig. 9. In addition, the keys corresponding to the [5] and [6] buttons of the numeric buttons 10c, i.e., the copy-from-PC key and the copy-to-PC key are utilized in the event that text data is exchanged between the text editor 19 and the clipboard 20 within the cellular phone 2 and the clipboard 34 of the PC 3, as can be understood from Fig. 9.

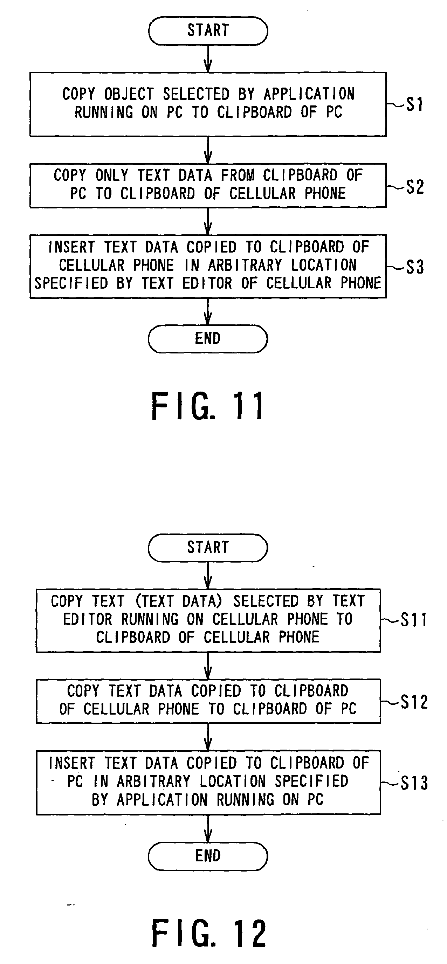

Fig. 11 is a processing flowchart illustrating copy processing steps to copy text data from the PC (hereinafter, referred to as copy-from-PC processing steps) performed by the control information processing unit 11 of the cellular phone 2 and the control information processing unit 26 of the PC 3, in a case of selecting the copy key from the PC. Fig. 12 is a processing flowchart illustrating copy processing steps to copy text data to the PC (hereinafter, referred to as copy-to-PC processing steps) performed by the control information processing unit 11 of the cellular phone 2 and the control information processing unit 26 of the PC 3.

With the copy-from-PC processing steps (Step S1 through Step S3) illustrated in Fig. 11, upon the user inputting the [5] button of the numeric buttons 10c in the cellular phone 2, the processing steps thereof start (START).

When the copy-from-PC processing steps start, first, the flow proceeds to Step S1, where the control information processing unit 26 of the PC 3, which received operating information from the control information processing unit 11 of the cellular phone 2, copies the text object 39 selected in the application running on the PC 3, and pastes this in the clipboard 34 of the PC 3. The processing step in Step S1 is complete when the text object 39 is pasted to the clipboard 34.

When the processing step in Step S1 is complete, next, in Step S2, the control information processing unit 11 of the cellular phone 2 receives the text data 40 of the text object 39 pasted to the clipboard 34 of the PC 3 from the control information processing unit 26 of the PC 3, copies the received text data 40, and pastes this in the clipboard 20 of the cellular phone 2.

Upon the text data 40 included in the text object 39 pasted to the clipboard 34 of the PC 3 being pasted to the clipboard 20 of the cellular phone 2, the processing step in Step S2 is complete, and subsequently in Step S3, the control information processing unit 11 of the cellular phone 2 inserts the text data 39 pasted to the clipboard 20 of the cellular phone 2 in the location (the position of the cursor 53) specified in the text editor 19 of the cellular phone 2.

When the text data 40 pasted to the clipboard 20 of the cellular phone 2 is inserted in the location specified in the text editor 19, the processing step in Step S3 is complete, and accordingly, the entire copy-from-PC processing steps are complete (END).

On the other hand, with the copy-to-PC processing steps (Step S11 through Step S13), upon the user inputting the [6] button of the numeric buttons 10c in the cellular phone 2, the processing steps thereof start (START).

When the copy-to-PC processing steps start, first, the flow proceeds to Step S11, where the control information processing unit 11 of the cellular phone 2 pastes the text data (selected text data) 56 selected, of the text data to be stored in the text editor 19, in the clipboard 20 of the cellular phone 2. The processing step in Step S11 is complete when the selected text data 56 is pasted to the clipboard 20 of the cellular phone 2.

When the processing step in Step S11 is complete, next, in Step S12, the control information processing unit 26 of the PC 3 receives the selected text data 56 pasted to the clipboard 20 of the cellular phone 2 from the control information processing unit 11 of the cellular phone 2, and pastes the received selected text data 56 in the clipboard 34 of the PC 3. The processing step in Step S12 is complete when the selected text data 56 is pasted to the clipboard 34.

When the processing step in Step S12 is complete, next, in Step S13, the control information processing unit 26 of the PC 3 inserts the selected text data 56 pasted to the clipboard 34 of the PC 3 in the location selected under the remote operating mode in the application running. When the selected text data 56 pasted to the clipboard 34 of the PC 3 is inserted in the selected location, the processing step in Step S13 is complete, and accordingly, the entire copy-to-PC processing steps are complete (END).

Of the text edit functions, in the event of utilizing the text import function, keys corresponding to the [1] through [7] buttons of the numeric buttons 10c are selected as illustrated in the operating guide 45 of the Fig. 6.

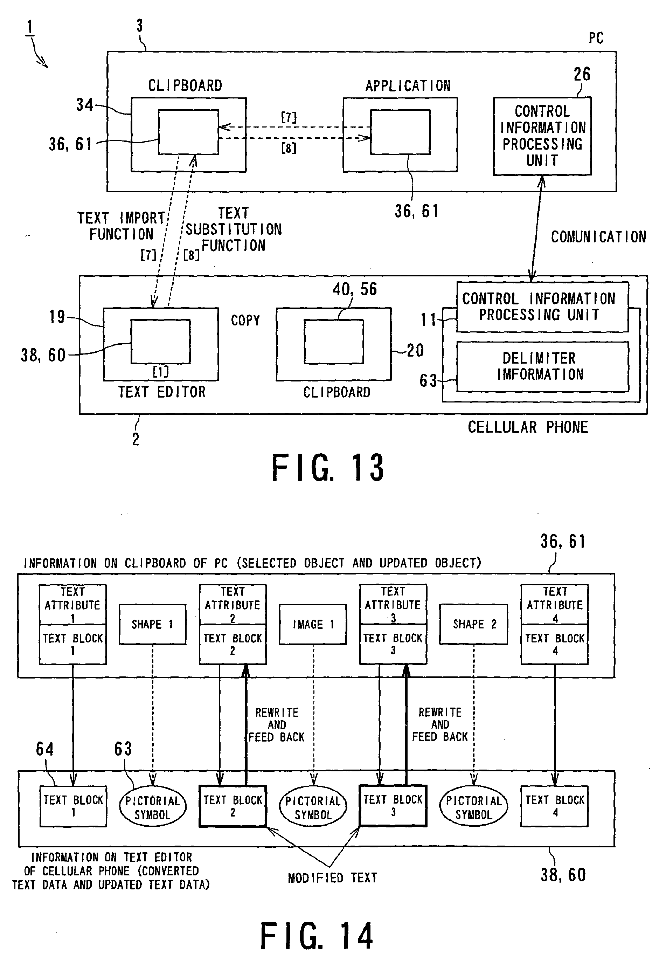

Fig. 13 is an explanatory diagram illustrating the flow of text data in the event that a role key using the text import function and text substitution function is selected.

Note that [7] and [8] illustrated in Fig. 9 indicate transfer of text data in the event of selecting a key corresponding to the numeric buttons 10c of the operating guide 45 illustrated in Fig. 6. Further, the delimiter information 63 shown in Fig. 13 is a information of later-described pictorial symbol 63. In Fig. 13, the communication unit 12 of the cellular phone 2 and the communication unit 22 of the PC 3 are omitted from the same perspective as with Figs. 4 and 9.

Upon the user pressing any one of the [7] and [8] buttons of the numeric buttons 10c under the text edit mode illustrated in Fig. 6, the role key corresponding to the pressed numeric buttons 10c is selected, and the control information processing unit 11 and the control information processing unit 26 execute the role corresponding to the selected role key. Next, description will be made regarding the role of each role key corresponding to the numeric buttons 10c and the processing content thereof.

The [7] button of the numeric buttons 10c corresponds to an import-from-PC key. Upon the user selecting the import-from-PC key, the object 36 selected in the application running on the PC 3 can be imported in the text storing region of the text editor 19 of the cellular phone 2 via the clipboard 34 of the PC 3 as converted text data 38 created by substituting objects having an attribute other than the text attribute with a specific text code.

The [8] button of the numeric buttons 10c corresponds to a feed-back-to-PC key. The feed-back-to-PC key is, following the converted text data 38 stored in the text storing region of the text editor 19 of the cellular phone 2 being edited, a role key for substituting the text data included in the selected object 36 with the edited text data (hereinafter, referred to as updated text data) 60 so as to provide a selected object 61 of which text data is updated (hereinafter, referred to as updated object). Accordingly, this key is selected following the import-from-PC key being selected, i.e., this key is used with the import-from-PC key as a pair.

There is the need to reflect the text data modified in the text editor 19 of the cellular phone 2 upon the application of the PC 3 selected prior to modification thereof at the time of utilizing the text import function and the text substitution function, and also prevent information and attributes other than text data from being affected. Accordingly, the information equipment remote operating system 1 (cellular phone 2) employs an arrangement such as illustrated in Fig. 14.

Fig. 14 is an explanatory diagram illustrating an arrangement for realizing the text import function and the text substitution function in the information equipment remote operating system 1 (cellular phone 2).

The selected object 36 illustrated in Fig. 14 is an object selected in an application to run on the PC 3, and is pasted to the clipboard 34 of the PC 3. On the other hand, the converted text data 38 is text data converted into a pictorial symbol 63 at the time of importing an object having no text attribute of the objects pasted to the clipboard 34 of the PC 3 in the text editor 19 of the cellular phone 2. Now, the pictorial symbol 63 that is an example of specific text codes as a delimiter, and is generally used for creating and editing a text.

The control information processing unit 11 of the cellular phone 2 copies only text data (text block illustrated in Fig. 14) included in the selected object 36 from the control information processing unit 26 of the PC 3, converts an object having an attribute, such as a shape or image attribute, other than the text attribute into the pictorial symbol (delimiter) 63, and feeds this back to the original location. In other words, the converted text 38 is text data in which consecutive texts surrounded by the pictorial symbol 63 become a text block 64.

For example, the converted text data 38 illustrated in Fig. 14 is text data in which the selected object 36 including four objects having the text attribute and three objects having a non-text attribute is converted into text data including the four text blocks 64 and three pictorial symbols 63 to be inserted between the four text blocks 64.

The four text blocks 64 included in the converted text data 38 is text data included in an object having the text attribute. Accordingly, any of the four text blocks 64 can be edited in the text editor 19. With the updated text data 60 edited in the text editor 19, upon the user selecting the feed-back-to-PC key, the updated portion of the selected object 36, i.e., only the text blocks are rewritten and fed back.

In the example illustrated in Fig. 14, only the text data corresponding to the second text block (text block 2 in Fig. 14) and the third text block (text block 3 in Fig. 14) is rewritten and fed back.

Thus, in the event that the user selects the feed-back-to-PC key, rewriting and feeding back only the updated text block results in configuring the information equipment remote operating system 1 (or cellular phone 2) wherein information and attributes other than text data are saved without any change and without being affected, and modified text data is reflected in the application of the PC 3 selected prior to the modification.

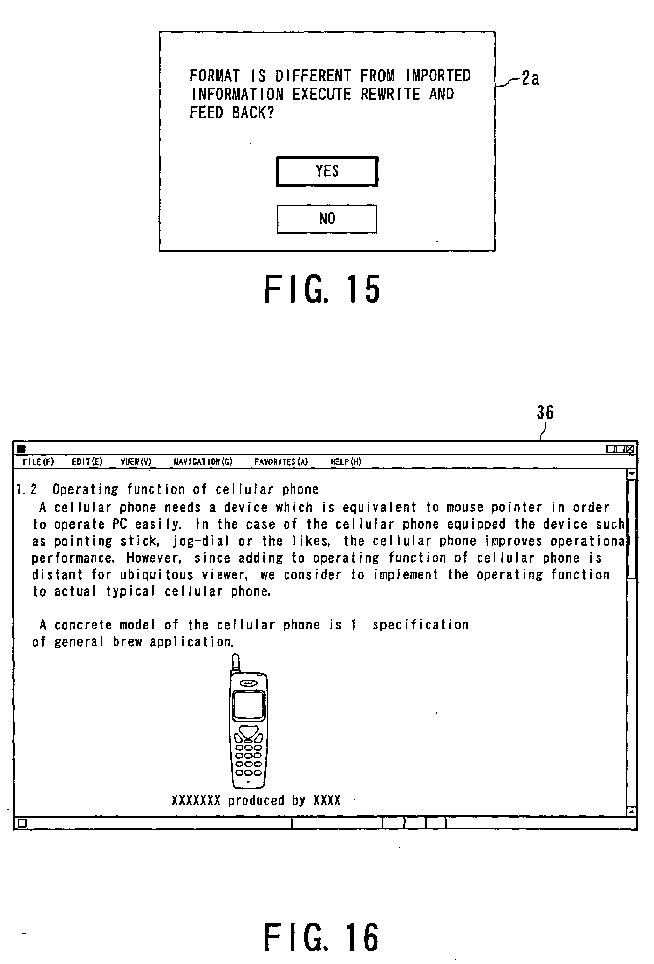

In addition, the format of the updated text data 60 is checked at the time of feeding the updated text data 60 back to the PC, and in the event that array of delimiters differs, an attention attracting screen is displayed on the operating-side display unit 2a of the cellular phone 2 to attract the user's attention. The attention attracting screen is, for example, displayed in the format such as illustrated in Fig. 15.

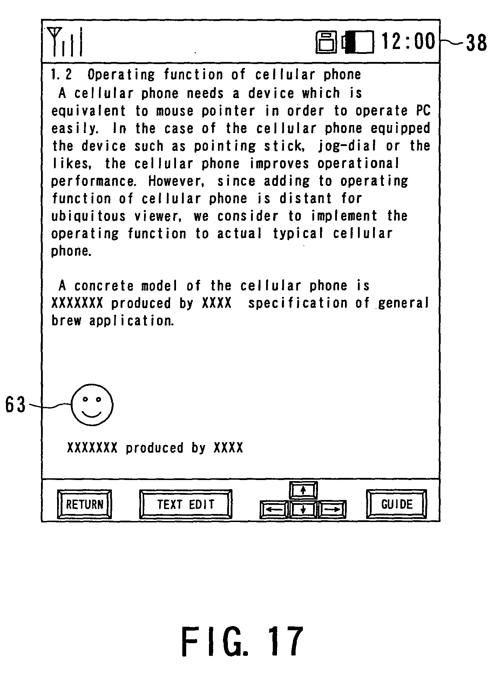

Fig. 16 is an explanatory diagram illustrating an example of the selected object 36 selected in an application running on the PC 3, and Fig. 17 is an explanatory diagram illustrating a screen display example to be displayed on the operating-side display unit 2a in the event that the selected object 36 illustrated in Fig. 16 is text-imported in the text editor 19 of the cellular phone 2 from the PC 3 as converted text data 38 using the text import function.

Upon the user selecting the selected object 36 illustrated in Fig. 16 and the import-to-PC key, the selected object 36 is stored in the text storing region of the text editor 19 of the cellular phone 2 via the clipboard 34 of the PC 3 as the converted text data 38 in the flow such as illustrated in Fig. 13. When the converted text data 38 is stored in the text storing region of the text editor 19 of the cellular phone 2, a screen such as illustrated in Fig. 17 is displayed on the operating-side display unit 2a.

As illustrated in Fig. 17, an image affixed in the document illustrated in Fig. 16 is displayed as a delimiter in a state of substituting the image with the pictorial symbol 63. The user can edit the document portion illustrated in Fig. 16 under the text edit mode illustrated in Fig. 17. Upon the user editing the document portion illustrated in Fig. 16 and returning the document edited using the text substitution function to the PC, only the document portion is updated with the edited document while retaining the image illustrated in Fig. 16.

Note that the pictorial symbol 63 may be deleted during editing, but if the pictorial symbol 63 is deleted, the image within the selected object 36 is also deleted.

Upon the user pressing the [#] button of the numeric buttons 10c in the screen illustrated in Fig. 17 (text edit mode), a jumping key is selected as a link destination as illustrated in the operating guide 45 of Fig. 6, resulting in jumping to the link destination based on the link information of the pictorial symbol 63 so as to display the information of the link destination on the operating-side display unit 2a of the cellular phone 2.

Specifically, in the event that the pictorial symbol 63 illustrated in Fig. 17 has link information, upon the user selecting the jumping key as a link destination, the control information processing unit 11 acquires the entity of the pictorial symbol 63, i.e., the image illustrated in Fig. 16 from the link destination, and the screen information processing unit 13 processes the acquired information and displays the information on the operating-side display unit 2a of the cellular phone 2. Thus, the user can browse and reference the information of the link destination. Note that selection of the jumping key as a link destination is effective only in the case in which an object pasted to the clipboard has the link information as to the original object.

Next, description will be made regarding the processing steps (hereinafter, referred to as import-from-PC processing steps) performed by the control information processing unit 11 in the event that the user selects the import-from-PC key at the time of utilizing the text import function, and the processing steps (hereinafter, referred to as feed-back-to-PC processing steps) performed by the control information processing unit 11 in the event that the user selects the feed-back-to-PC key at the time of utilizing the text substitution function.

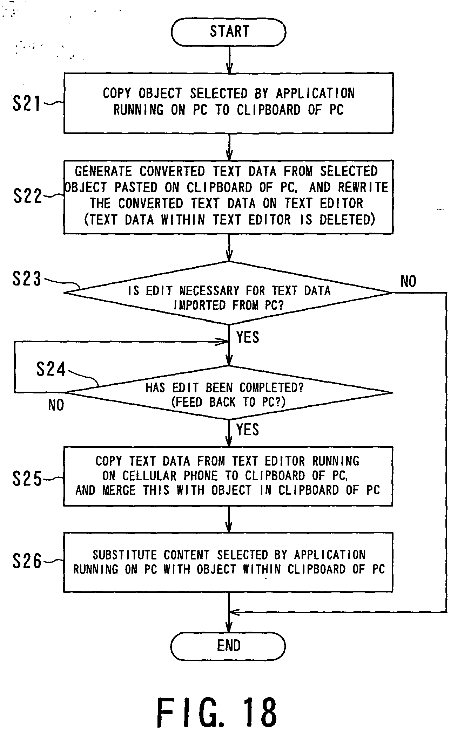

Fig. 18 is a processing flowchart illustrating the import-from-PC processing steps and the feed-back-to-PC processing steps performed in the information equipment remote operating system 1 according to the present invention. In the flowchart illustrated in Fig. 18, the processing steps from Step S21 to Step S23 correspond to the import-from-PC processing steps, and the processing steps from Step S24 to Step S26 correspond to the feed-back-to-PC processing steps.

With the import-from-PC processing steps, upon the user selecting an object in an application running on the PC 3 and pressing the [7] button of the numeric buttons 10c, the import-from-PC key is selected, and the processing steps start (START).

When the import-from-PC processing steps start, first, in Step S21, the control information processing unit 26 of the PC 3, which received operating information from the control information processing unit 11 of the cellular phone 2, copies the selected object 36 selected in the application running on the PC 3, and pastes this in the clipboard 34 of the PC 3. When the selected object 36 is pasted to the clipboard 34, the processing step in Step S21 is complete.

When the processing step in Step S21 is complete, next, in Step S22, while the control information processing unit 11 of the cellular phone 2 receives text data (text block 64 illustrated in Fig. 14) imported from the selected object 36 pasted to the clipboard 34 of the PC 3 from the control information processing unit 26 of the PC 3, the control information processing unit 11 of the cellular phone 2 converts the object other than the text attribute (for example, shape or image object) into the pictorial symbol 63 (delimiter) and embeds this so as to generate the converted text data 38. Subsequently, the control information processing unit 11 of the cellular phone 2 rewrites the converted text data 38 upon the text storing region of the text editor 19 of the cellular phone 2. Consequently, the text data stored in the text storing region is eliminated, and only the text data received from the selected object 36 is stored in the text storing region.

When the converted text data 38 is rewritten upon the text storing region of the text editor 19 of the cellular phone 2, the processing step in Step S22 is complete, and subsequently in Step S23, edit of the converted text data 38 imported from the PC 3 is accepted. Subsequently, in the event that the user edits the converted text data 38 (in the case of YES in Step S23), the processing step in Step S23 is complete, and the flow proceeds to Step S24. Note that when the processing step in Step S23 is complete, the entire import-from-PC processing steps (Step S21 through Step S23) are complete.

In the processing step in Step S24, selection of the feed-back-to-PC key is accepted. When the user selects the feed-back-to-PC key (in the case of YES in Step S24), the flow proceeds to Step S25. In Step S25, the control information processing unit 11 copies the updated text data 60 following edit from the text editor 19 of the cellular phone 2, provides the copied updated text data 60 to the control information processing unit 26 of the PC 3 along with operating information, and controls the control information processing unit 26 to merge the updated text data 60 with the selected object 36 pasted to the clipboard 34 of the PC 3.

When the updated text data 60 is merged with the selected object 36, the text data of the selected object 36 pasted to the clipboard 34 of the PC 3 is updated and becomes an updated object 61. When the selected object 36 pasted to the clipboard 34 of the PC3 becomes the updated object 61, the processing step in Step S25 is complete.

When the processing step in Step S25 is complete, subsequently in Step S26, the control information processing unit 26 of the PC 3, which received operating information from the control information processing unit 11 of the cellular phone 2, substitutes the selected object 36 to be selected in the application running on the PC 3 with the updated object 61 pasted to the clipboard 34 of the PC 3.

When the selected object 36 to be selected in the application running on the PC 3 is substituted with the updated object 61, the processing step in Step S26 is complete, whereby the entire feed-back-to-PC processing steps are complete (END).

On the other hand, in the event that the user does not edit the converted text data 38 in Step S23 (in the case of No in Step S23), the flow proceeds to END, and the entire feed-back-to-PC processing steps (Step S21 through Step S23) are complete (END).

On the other hand, in the event that the user does not select the feed-back-to-PC key in Step S24 (in the case of No in Step S24), the processing in Step S24 is repeated until the user selects the feed-back-to-PC key.

Now, of the role keys to be displayed on the operating guide 45 illustrated in Fig. 6, description will be made below regarding the unexplained role keys. In the operating guide 45 illustrated in Fig. 6, nothing is displayed in the fields corresponding to the [9] and [0] buttons of the numeric buttons 10c. This means that even in the event that the [9] or [0] button of the numeric buttons 10c is pressed, no role key is selected.

Upon the user pressing the [*] button of the numeric buttons 10c, an undo key is selected. The undo key is a role key to be selected in the case of canceling the previous operation. When the user selects the undo key, the control information processing unit 11 cancels the last operation performed by the user.

As described above, communication using the information equipment remote operating system 1 and the cellular phone 2 markedly reduces the communication time thereof as compared with conventional direct remote operations since communication is performed only in the case that text data is stored in the text editor 19 of the cellular phone2 or pasted to the clipboard 20 without continuing a communication state.

In addition, since text data is stored in the text editor 19 of the cellular phone2 or pasted to the clipboard 20, the amount of communication data between the cellular phone 2 and the PC 3 can be reduced greatly. Consequently, the operating performance of the cellular phone 2 improves, and temporary-performance deterioration thereof can be avoided.

In addition, even in the event that there is an object to be imported or rewritten and fed back including an attribute other than the text attribute, only the text portion can be edited without deteriorating the object other than the text and the attribute thereof.

Further in addition, even in the event that, of the objects imported in the cellular phone 2, there is an object having an attribute other than text attribute, as long as this object having an attribute other than text attribute has link information, the user can jump to the link destination, and browse and reference the entity of the object having the attribute other than the text attribute.

## Claims

1. An information equipment remote operating system configured by connecting an operated-side information equipment for running an application program with an operating-side information equipment remote-operating the application program, said operating-side information equipment comprising:
a communication unit configured to transmit/receive various types of information to/from the operated-side information equipment;
an operating unit configured to output an operating information based on input operations;
a control information processing unit configured to transmit the operating information received from the operating unit to the operated-side information equipment via the communication unit in the event that the operating information received from the operating unit is operating information for operating an application program to be run on the operated-side information equipment, and so as to operate the application program to be operated in the case in which the operating information received from the operating unit is operating information for operating an application program to be run on the operating-side information equipment;
a text storing unit configured to receive and store text data of objects to be stored in the clipboard of the operated-side information equipment via the communication unit, and also edit the stored text data; and
a text storing unit configured to allow the text data of the text storing unit to be displayed.

2. An information equipment comprising:
a communication unit configured to transmit/receive various types of information to/from another information equipment so as to run an application program;
an operating unit configured to output an operating information based on input operations;
a control information processing unit for operating an application program to be operated based on the operating information received from the operating unit; and
a text storing unit configured to store and read out text data;
wherein said control processing unit reads out an object to be stored in storing unit included in another information equipment to be connected therewith via a communication network.

3. The information equipment according to Claim 2, said control processing unit including:
at least one of a text copy function for storing text data created by copying text data to be stored in storing unit included in another information equipment to be connected therewith via a communication network in the text storing unit, and a text acquisition function for storing text data created based on an object to be stored in storing unit included in another information equipment to be connected therewith via a communication network in the text storing region of a text editor; and
a text substitution function for substituting the text portion of text data stored in the text storing region by using the text acquisition function with the text portion of an object to be stored in the storing unit.

4. The information equipment according to Claim 2, wherein said control processing unit creates text data by substituting the portion other than the text attribute of an object to be stored in storing unit included in another information equipment to be connected therewith via a communication network with a specific text code.

5. The information equipment according to Claim 2, wherein said control processing unit creates text data by substituting the portion other than the text attribute of an object to be stored in storing unit included in another information equipment to be connected therewith via a communication network with a specific text code in which a link information is embedded in the event that the portion other than the text attribute of the object includes the link information, and also so as to jump to a link destination embedded in the selected specific text code, and to allow the information of the link destination to be viewed in the event that the specific text code of the text data created from the object to be stored in the storing unit is selected.

6. An information equipment for remotely controlling another information equipment having a clipping board, comprising:
a communication device to communicate various types of information to/from another information equipment via a network, so as to remotely run an application program on the another information equipment;
an receiving unit configured to receive input operations by a user, one of the input operation being a retrieving request to the another information equipment;
a text storage to store text data;
a control processing unit configured to transmit the retrieving request to the another information equipment and configured to retrieve the object is a text data.

7. The equipment according to Claim 6, further comprising:
a text editor to edit the retrieved object and a transmitter configured to transmit the edited object by the text editor to the another information equipment.
